# EUROPÄISCHE PATENTSCHRIFT

(11) **EP 2 289 225 B1**
(45) Veröffentlichungstag und Bekanntmachung des Hinweises auf die Patenterteilung: **18.03.2015**
(21) Anmeldenummer: 09757308.3
(22) Anmeldetag: 05.06.2009
(51) Int. Cl.: H04L 29/06, G07F 7/10

(54) **VERFAHREN ZUM PERSONALISIEREN EINES SICHERHEITSELEMENTS EINES MOBILEN ENDGERÄTS**
METHOD FOR PERSONALIZING A SAFETY ELEMENT OF A MOBILE TERMINAL DEVICE
PROCÉDÉ POUR PERSONNALISER UN ÉLÉMENT DE SÉCURITÉ D UN TERMINAL MOBILE

(30) Priorität: 06.06.2008 DE 102008027043
(43) Veröffentlichungstag der Anmeldung: 02.03.2011
(73) Patentinhaber: Giesecke & Devrient GmbH, 81677 München (DE)
(72) Erfinder: KRYSIAK, Ralph, 85570 Markt Schwaben (DE); NESS, Werner, 85716 Unterschleissheim (DE); GARBERS, Christian, CH-8625 Gossau (CH); WACKER, Dirk, 81371 München (DE)
(74) Vertreter: Branzka, Thomas
(86) Internationale Anmeldenummer: PCT/EP2009/004044
(87) Internationale Veröffentlichungsnummer: WO 2009/146925

(56) Entgegenhaltungen:
- EP-A2- 1 860 840
- US-B1- 7 023 994

## Beschreibung

Die Erfindung betrifft ein Verfahren zum Personalisieren eines Sicherheitselements eines mobilen Endgeräts, insbesondere in Form eines Smartcard-Chips eines Kommunikationsendgeräts. Das Verfahren umfasst die Schritte des Vorpersonalisierens des Sicherheitselements im Rahmen seines Herstellungsvorgangs und des Endpersonalisierens des Sicherheitselements bei der erstmaligen Verwendung des Endgeräts durch einen Nutzer, bei dem eine Kommunikationsverbindung zwischen dem Endgerät und einem Trustcenter eines Kommunikationsnetzbetreibers aufgebaut wird.

Bei der Personalisierung des Sicherheitselements des mobilen Endgeräts wird davon ausgegangen, dass sich das Sicherheitselement zum Zeitpunkt der Personalisierung in dem Endgerät befindet. Das Sicherheitselement kann hierbei fest in das Endgerät integriert sein. Genauso gut kann das Sicherheitselement in einer Karte oder einem Bauteil implementiert sein, welche in das Endgerät eingesteckt werden können. Grundsätzlich spielt es bei dem vorgeschlagenen Verfahren keine Rolle, ob das Sicherheitselement in einer Karte, z.B. einer SIM-Karte, oder dem mobilen Endgerät mit dem Sicherheitselement verwendet wird.

Unter dem Begriff "Sicherheitselement" wird insbesondere ein Smartcard-Chip oder ein intelligenter Mikroprozessor verstanden. Unter einem mobilen Endgerät sollen alle Geräte verstanden werden, welche beispielsweise über GSM, UMTS, CDMA oder ähnliche Netzwerke in einem entsprechenden Kommunikationsnetzwerk kommunizieren, also insbesondere Mobilfunkgeräte, PDAs und dergleichen.

Ist das Sicherheitselement z.B. in einer Chipkarte angeordnet, so ist ein üblicher Weg zur Personalisierung des Sicherheitselements, dieses bei dem Hersteller des Sicherheitselements mit dem Betriebssystem auszurüsten und nachfolgend in einer sicheren Umgebung beim Hersteller der Chipkarte zu personalisieren. Dieser übliche Weg ist nicht mehr möglich, sobald das Sicherheitselement, wie eingangs erläutert, integrierter Bestandteil des Endgeräts ist. Aus Sicherheitsgründen wäre es wünschenswert, wenn die bekannte Zweiteilung, die Herstellung des Sicherheitselements und die Einbringung des Betriebssystems an einem Ort sowie die Personalisierung des Sicherheitselements an einem anderen, sicheren Ort, auch bei geänderter Bauform, aufrecht erhalten werden könnte.

In diesem Zusammenhang offenbart die EP 1 002 440 B1 ein Verfahren zum kundenseitigen Personalisieren von GSM-Chips über eine Luftschnittstelle. Ein von einem Netzbetreiber vorpersonalisierter Chip wird automatisch endpersonalisiert, wenn sich der Teilnehmer erstmals mit seinem, den Chip enthaltenden, Endgerät in ein Teilnehmernetzwerk einbucht. Beim Endpersonalisieren wird, nachdem eine Verbindung zwischen dem Endgerät und einem Trustcenter des Netzbetreibers aufgebaut wurde, ein neuer, zweiter geheimer Schlüssel mit dem Trustcenter ausgehandelt und anschließend zum Einbringen in den Chip an das Endgerät übermittelt. Der zweite Schritt des Endpersonalisierens wird dabei durch den Teilnehmer mit Hilfe des Geräts über ein Identifikationszentrum ausgeführt. Nachteilig bei diesem Vorgehen ist, dass der Hersteller des Chips bereits initiale kartenbezogene Daten in den Chip einbringen muss.

Es ist ferner aus der EP 1 860 840 A2 bekannt, die Personalisierung vollständig vom Nutzer des Endgeräts über eine vertrauenswürdige Stelle abzuwickeln. Hierzu werden zur Personalisierung notwendige Identifikationsdaten vom Nutzer in das Sicherheitsmodul des (Telekommunikations-)Endgeräts überführt. Dies kann beispielsweise durch manuelles Eingeben von alphanumerischen Ziffern erfolgen. Das Personalisierungsverfahren wird fortgesetzt, indem das Endgerät Verbindung zu einem Trustcenter, einer vertrauenswürdigen Stelle, aufnimmt. Hierbei werden in einem ersten Schritt des Personalisierungsverfahrens die Identifikationsdaten an das Trustcenter übertragen. Das Trustcenter wertet die empfangenen Identifikationsdaten auf Korrektheit aus und baut im positiven Fall eine sichere Verbindung zu dem Endgerät auf. Das Trustcenter entnimmt den Identifikationsdaten, welche Personalisierungsdaten der Anwender benötigt und initiiert ein Übertragen dieser Daten auf das Sicherheitsmodul des Endgeräts. Nach der Übertragung der Personalisierungsdaten wird das Endgerät in einen normalen Betriebsmodus zurückversetzt und kann zu den vorgesehenen Kommunikationszwecken genutzt werden.

Aus der US 7,023,994 ist ein Personalisierungsverfahren bekannt, das eine Vor- und eine Endpersonalisierungsphase aufweist. Zur Vorbereitung der Vorpersonalisierung werden einem Chiphersteller von einem Netzbetreiber verschiedene Daten zur Verfügung gestellt, u.a. ein Satz Datennummern, eine Versionsnummer und ein mit der Versionsnummer eindeutig verbundener DES-Schlüssel. Diese Daten werden von dem Chiphersteller in jeden Chip eingebracht. Der Chip erzeugt anschließend aus der mit der Kartennummer eindeutig verknüpften Teilnehmerkennung und dem DES-Schlüssel eine geheime Zahl. Bei der Endpersonalisierung werden die Kartennummer und die Versionsnummer ausgelesen und an den Netzbetreiber übermittelt. Aus den ausgelesenen Daten kann der Netzbetreiber ebenfalls die geheime Zahl bestimmen. Die bekannte Lösung stellt darauf ab, den Verwaltungsaufwand beim Netzbetreiber so gering wie möglich zu halten, indem sie so gestaltet ist, dass sämtliche für die Endpersonalisierung benötigten Daten zum Zeitpunkt der Endpersonalisierung von dem Netzbetreiber alleine aus den vom Chip übermittelten Informationen nachgebildet werden können. Dem verminderten Verwaltungsaufwand beim Netzbetreiber steht allerdings ein erhöhter Verwaltungsaufwand beim Chiphersteller gegenüber. Dieser muss die vom Netzbetreiber übermittelten Daten nun seinerseits verwalten und insbesondere testen, ob die von dem Chip vorgenommenen Geheimzahlermittlungen richtig sind.

Ausgehend von diesem Stand der Technik ist es Aufgabe der vorliegenden Erfindung, ein Verfahren zum Personalisieren eines Sicherheitselementes eines Endgerätes anzugeben, mit dem eine sichere Vorpersonalisierung bei einem Hersteller von Sicherheitselementen in einer an sich unsicheren Umgebung ermöglicht wird, ohne dass dem Hersteller persönliche Daten übermittelt oder von ihm verwaltet werden müssen. Das Verfahren soll auf kostengünstige Weise durchführbar sein.

Diese Aufgabe wird durch ein Verfahren mit den Merkmalen des Patentanspruches 1 gelöst. Vorteilhafte Ausgestaltungen ergeben sich aus den abhängigen Patentansprüchen.

Die Erfindung schafft ein Verfahren zum Personalisieren eines Sicherheitselements eines mobilen Endgeräts, welches insbesondere in Form eines Smartcard-Chips eines Kommunikationsendgeräts ausgebildet ist und die Schritte des Vorpersonalisierens des Sicherheitselements im Rahmen seines Herstellungsvorgangs und des Endpersonalisierens des Sicherheitselements bei der erstmaligen Verwendung des Endgeräts durch einen Nutzer umfasst, bei dem eine Kommunikationsverbindung zwischen dem Endgerät und einem Trustcenter eines Kommunikationsnetzbetreibers aufgebaut wird. Erfindungsgemäß wird im Rahmen der Vorpersonalisierung des Sicherheitselements ein für das Sicherheitselement eindeutiger Hauptschlüssel ermittelt und an das Trustcenter übermittelt. Im Rahmen der Endpersonalisierung des Sicherheitselements werden bei der erstmaligen Verwendung des Endgeräts persönliche Daten des Nutzers an das Trustcenter übermittelt und dort mit dem Hauptschlüssel zu einem modifizierten Hauptschlüssel verknüpft. Schließlich wird das Sicherheitselement mit dem modifizierten Hauptschlüssel personalisiert.

Die Ermittlung des für das Sicherheitselement eindeutigen Hauptschlüssels ermöglicht eine Individualisierung des Sicherheitselements bereits beim Hersteller. Damit kann die Lieferung der Sicherheitselemente an einen Komplettierungsstandort mit den dabei anfallenden Produktionsschritten entfallen. Das erfindungsgemäße Verfahren erlaubt damit das Personalisieren eines Sicherheitselements, welches in die Hardware eines Endgeräts integriert ist und die herkömmlichen Verfahrensschritte bei der Herstellung an besonders gesicherten Herstellungsorten nicht mehr erlaubt.

Insbesondere erfolgt die Ermittlung des Hauptschlüssels, wenn das Sicherheitselement während seiner Herstellung zu Testzwecken bestromt wird. Besonders bevorzugt ist es, dass die Ermittlung des Hauptschlüssels erfolgt, wenn das Sicherheitselement während seiner Herstellung das erste Mal bestromt wird. Eine besonders rationelle Fertigung ergibt sich dann, wenn die Ermittlung des Hauptschlüssels erfolgt, so lange das Sicherheitselement während seiner Herstellung noch im Waferverbund vorliegt. Hierdurch ist einerseits eine effiziente Chipindividualisierung sichergestellt. Andererseits erfolgt die Chipindividualisierung zu einem frühest möglichen Zeitpunkt. Die Ermittlung des Hauptschlüssels kann z.B. vor oder nach dem Senden eines ATR (Answer to Reset)-Kommandos oder eines ATS (Answer to Select)-Kommandos erfolgen. Die Ermittlung des Hauptschlüssels könnte auch durch das Senden eines Kommandos angestoßen werden, wobei hierfür ein bestimmtes Kommando vorgesehen sein kann oder aber das erste gesendete Kommando als Auslöser verwendet wird. Der Hauptschlüssel kann z.B. in Gestalt eines kryptographischen Schlüssels, eines Startwerts für einen deterministischen Zufallsgenerator, eines Startwerts für ein oder mehrere Zählerobjekte oder eines Passworts ausgebildet werden.

Der Hauptschlüssel wird aus zumindest zwei Teilschlüsseln gebildet, wobei der erste Teilschlüssel in einem Betriebssystem für das Sicherheitselement und der zweite Teilschlüssel in einem Schlüssel der Herstellungsstätte enthalten ist. Der Schlüssel der Herstellungsstätte wird auch als Fab-Key bezeichnet. Dadurch, dass der Hauptschlüssel auch eine Information über die Herstellungsstätte trägt, ist die eindeutige Zuweisung eines Hauptschlüssels auch bei mehreren Fertigungsstätten zuverlässig gewährleistet.

Erfahrungsmäßig wird dem Sicherheitselement während der Herstellung eine Seriennummer zugeordnet die in einem Speicher des Sicherheitselements hinterlegt wird. Es ist ferner vorgesehen, dass aus dem Hauptschlüssel und der Seriennummer während der Herstellung des Sicherheitselements ein individueller Schlüssel generiert wird, der in dem Speicher des Sicherheitselements gespeichert wird. Die Ermittlung des individuellen Schlüssels, insbesondere durch das in das Sicherheitselement eingebrachte Betriebssystem, stellt eine Testfunktion dar. Anhand dieser Informationen ist auf eine einfache Weise beim Endpersonalisieren die Überprüfung der Authentizität des Sicherheitselements möglich. Hierzu erfolgt im Rahmen der Endpersonalisierung des Sicherheitselements im Rahmen einer weiteren Ausgestaltung nach der Eingabe der persönlichen Daten des Nutzers ein authentisches Auslesen der Seriennummer aus dem Speicher des Sicherheitselements, die insbesondere zusammen mit den persönlichen Daten des Nutzers des Endgeräts und der zu personalisierenden Applikation an das Trustcenter übertragen wird. Gemäß einer weiteren Ausgestaltung kann dann durch das Trustcenter die Authentizität der Seriennummer überprüft werden und aus dem in dem Trustcenter gespeicherten Hauptschlüssel sowie der Seriennummer der individuelle Schlüssel abgeleitet werden.

Die persönlichen Daten des Nutzers können gemäß einer Variante in ein mit dem Trustcenter kommunikativ verbundenes Terminal eingegeben werden. Die Datenübertragung von dem Terminal zu dem Trustcenter kann leitungsgebunden oder kabellos erfolgen. Alternativ können die persönlichen Daten des Nutzers in das Endgerät mit dem Sicherheitselement eingegeben werden, wobei diese dann insbesondere über eine Luftschnittstelle an das Terminal übertragen werden.

Gemäß einer weiteren Ausgestaltung wird in dem Trustcenter eine Applikation mit dem modifizierten Hauptschlüssel personalisiert und an das Endgerät übertragen. Die Applikation kann bereits in dem Trustcenter gespeichert sein. Ebenso kann die Applikation, wie bereits erläutert, im Rahmen der Endpersonalisierung von dem Endgerät an das Trustcenter übertragen werden. Insbesondere wird die personalisierte Applikation über eine Luftschnittstelle an das Endgerät übertragen.

Die Erfindung wird nachfolgend näher anhand der Figuren beschrieben. Es zeigen:
- Fig. 1: eine schematische Darstellung des dem erfindungsgemäßen Verfahren zu Grunde liegenden Systems,
- Fig. 2: ein erstes Flussdiagramm, welches die Ermittlung des Hauptschlüssels im Rahmen der Vorpersonalisierung verdeutlicht, und
- Fig. 3: ein zweites Flussdiagramm, welches die Endpersonalisierung des Sicherheitselements nach Ausgabe des das Sicherheitselement enthaltenen Endgeräts an einen Nutzer verdeutlicht.

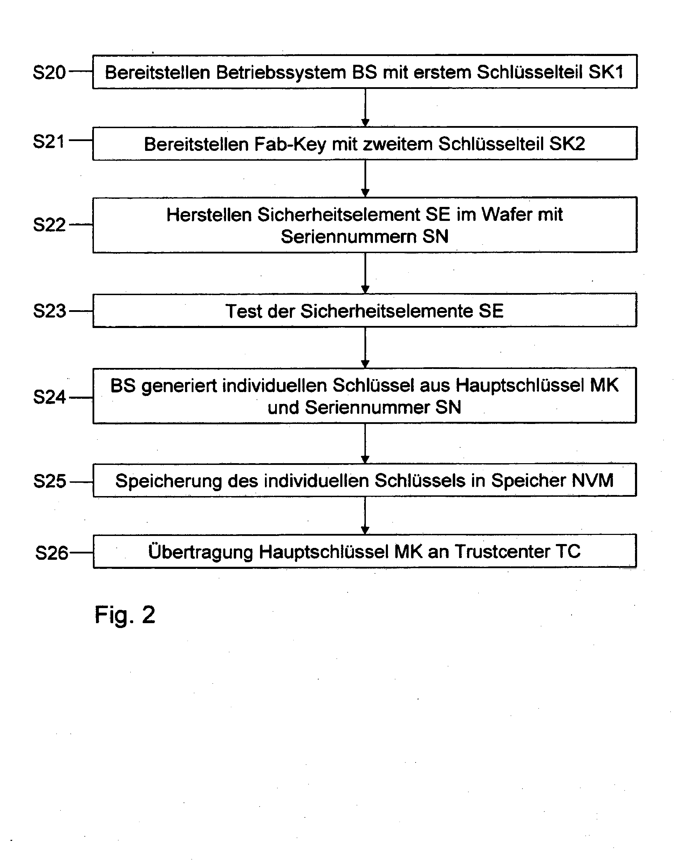

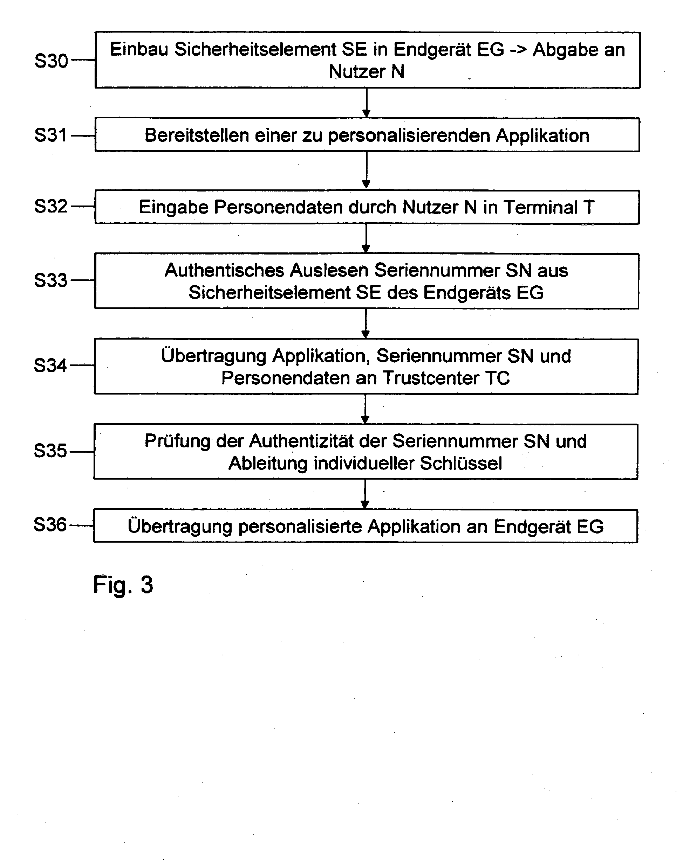

Das erfindungsgemäße Verfahren zum Personalisieren eines Sicherheitselements SE eines mobilen Endgeräts EG setzt sich im Wesentlichen aus zwei Schritten zusammen: dem Vorpersonalisieren des Sicherheitselements SE im Rahmen seines Herstellungsvorganges (dargestellt in Fig. 2) sowie dem Endpersonalisieren des Sicherheitselements SE bei der erstmaligen Verwendung des Endgeräts EG durch einen Nutzer N (dargestellt in Fig. 3). Das Sicherheitselement SE kann beispielsweise durch einen Smartcard-Chip ausgebildet sein. Bei dem Endgerät EG kann es sich z.B. um ein Telekommunikations-Endgerät handeln, welches über GSM, UMTS, CDMA oder ähnliche Netzwerke in einem entsprechenden Kommunikationsnetzwerk kommunizieren kann. Insbesondere kann es sich bei dem Endgerät somit um ein Mobilfunkendgerät, einen PDA, oder allgemein einen Rechner handeln.

Im Rahmen der Vorpersonalisierung wird das Sicherheitselement SE individualisiert, wobei dies im Rahmen der Herstellung des Sicherheitselements SE zusammen mit einer ROM-Software (sog. Embedded Software) erfolgt. Die Vorpersonalisierung bzw. die Chipindividualisierung kann z.B. bei der Erstinbetriebnahme des Sicherheitselements erfolgen, wenn das Sicherheitselement, vorzugsweise noch im Waferverbund vorliegend, beim Hersteller erstmalig mit Spannung versorgt wird. Die Individualisierung kann beispielsweise vor oder nach dem Senden eines ATR/ATS-Kommandos erfolgen. Die Individualisierung könnte ferner durch das Senden eines beliebigen oder eines für diesen Vorgang vorgesehenen Kommandos angestoßen werden. Die Individualisierung kann z.B. kryptographische Schlüssel, Startwerte für einen deterministischen Zufallszahlengenerator, Startwerte für Zählerobjekte (z.B. für Secure Messaging) oder Passwörter (z.B. TANs) erzeugen.

Dem Hersteller des Sicherheitselements SE werden von einem Software-Hersteller die ROM-Software und eine weitere Software, z.B. eine EEPROM-Software, bereitgestellt, welche gemeinsam die spätere vollständige Funktionalität des Sicherheitselements SE bereitstellen. Die Funktionalität kann beispielsweise JavaCard 2.2.1 und Global Platform 2.1.1 umfassen. Dabei sind Geheimnisse SK1 in der ROM-Software und SK2 in der EEPROM-Software enthalten, welche zur Erstellung eines Hauptschlüssels verwendet werden. Im Rahmen der Herstellung des Sicherheitselements werden die ROM-Software und die EEPROM-Software zusammen mit einer Seriennummer SN als chipindividuelle Werte in das Sicherheitselement SE eingebracht. Alternativ hierzu kann die Seriennummer SN aus in dem Sicherheitselement vorhandenen CPLC-Daten in dem Sicherheitselement selbst generiert werden. Alternativ können chipindividuelle Daten aus einem eingebrachten chipindividuellen Fab-Key abgeleitet werden. Wird das Sicherheitselement erstmals mit Spannung versorgt, werden unter anderem ein Verschlüsselungsschlüssel S-ENC = Hash (SK1 |SK2| SN| 01), der dem Hauptschlüssel MK entspricht, und ein Authentisierungsschlüssel S-MAC = Hash (SK1 |SK2| SN| 02) erzeugt.

Die Vorpersonalisierung des Sicherheitselements SE beruht somit darauf, einen für das Sicherheitselement eindeutigen Hauptschlüssel MK zu ermitteln und an ein Trustcenter TC, d.h. eine vertrauenswürdige Stelle, für die weitere Endpersonalisierung zu übermitteln. Die Ermittlung des Hauptschlüssels MK erfolgt gemäß einer in Fig. 2 schematisch dargestellten Variante durch das Bereitstellen eines Betriebssystems BS mit einem ersten Schlüsselteil SK1 (Schritt S20) sowie dem Bereitstellen eines sog. Fab-Keys, d.h. einem Schlüssel der Herstellungsstätte, welcher ein zweites Schlüsselteil SK2 umfasst (Schritt S21). Anschließend erfolgt in Schritt S22 das Herstellen des Sicherheitselements SE im Wafer mit jeweiligen Seriennummern SN. Um die Funktionsfähigkeit der noch im Waferverbund vorliegenden Sicherheitselemente SE zu überprüfen, folgt gemäß Schritt S23 ein Test der Sicherheitselemente SE. Dabei erfolgt eine zumindest einmalige Bestromung bzw. Spannungsversorgung des Sicherheitselements, wobei die Ermittlung des Hauptschlüssels MK aus dem ersten und dem zweiten Schlüsselteil SK1, SK2 bevorzugt bereits bei der ersten Bestromung in Schritt S23 erfolgt. Ferner generiert das Betriebssystem BS in Schritt S24 einen individuellen Schlüssel (Testfunktion) aus dem Hauptschlüssel MK und der Seriennummer SN. Dieser individuelle Schlüssel wird in Schritt S25 in einem Speicher NVM des Sicherheitselements SE oder des Endgeräts EG hinterlegt. Schließlich erfolgt in Schritt S26 die Übertragung des Hauptschlüssels MK an das Trustcenter TC. Die Übertragung des Hauptschlüssels MK an das Trustcenter TC kann auf beliebige Weise erfolgen.

In einer Variante der vorbeschriebenen Vorpersonalisierung übermittelt der Hersteller dem Trustcenter TC nicht den Hauptschlüssel MK, sondern die Schlüsselteile SK1, SK2 sowie die Seriennummer SN. Das Trustcenter TC übernimmt dann selbst die Erzeugung des Hauptschlüssels MK.

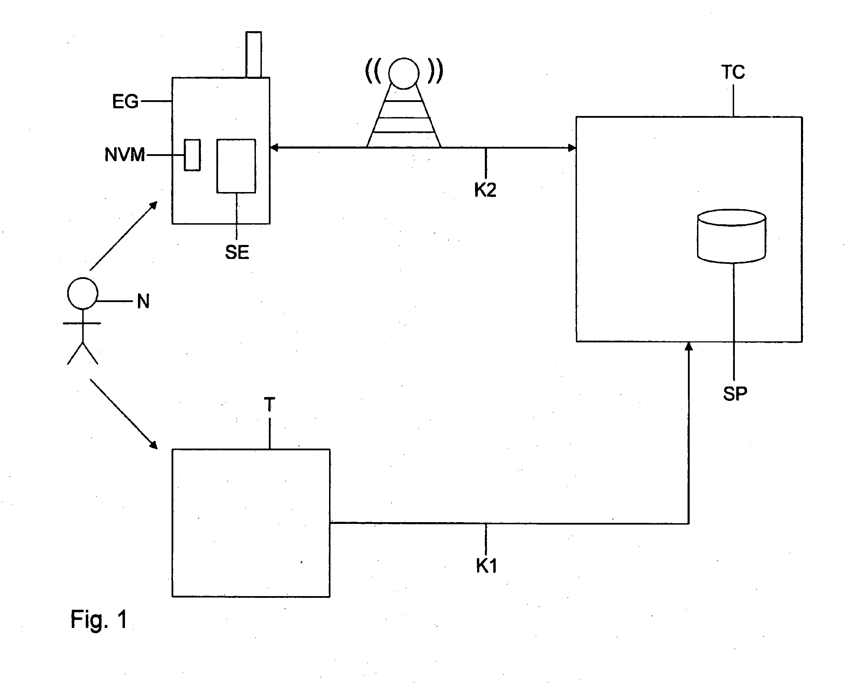

Das derart vorbereitete Sicherheitselement SE wird in ein Endgerät EG eingebaut. Anschließend erfolgt die Abgabe an einen Nutzer (Schritt S30 in Fig. 3). In Schritt S31 wird eine zu personalisierende Applikation bereitgestellt. Diese kann beispielsweise in einem Terminal T enthalten sein, auf welches der Nutzer N Zugriff hat (vgl. Fig.1). An dem Terminal T erfolgt zudem die Eingabe persönlicher Daten durch den Nutzer N (Schritt S32). Alternativ kann die zu personalisierende Applikation auch in dem Endgerät EG bereitgestellt werden. Ebenso können die persönlichen Daten des Nutzers in dem Endgerät EG eingegeben werden.

Gemäß Schritt S33 erfolgt ein Auslesen der Seriennummer SN aus dem Sicherheitselement SE in dem Endgerät EG. Die zu personalisierende Applikation, die Seriennummer SN und die persönlichen Daten (sog. Personendaten) des Nutzers N werden von dem Terminal T dann an das Trustcenter TC übertragen (Schritt S34). In Fig.1 ist dies durch das Bezugszeichen K1 gekennzeichnet. In dem Trustcenter TC erfolgt eine Prüfung der Authentizität der Seriennummer SN. Ferner erfolgt eine Ableitung des individuellen Schlüssels aus dem bereits in einem Speicher SP des Trustcenters TC eingespeicherten Hauptschlüssel MK des Sicherheitselements SE und der Seriennummer SN. Anschließend erfolgt eine Übertragung der mit dem Hauptschlüssel und den persönlichen Daten des Nutzers N personalisierten Applikation an das Endgerät EG, wobei hierfür eine Luftschnittstelle genutzt werden kann. In Fig.1 ist dies mit dem Bezugszeichen K2 gekennzeichnet.

Die Erfindung weist den Vorteil auf, dass die Ermittlung eines einem Sicherheitselement zugeordneten Hauptschlüssels während der Herstellung des Sicherheitselements erfolgt. Dieser an ein Trustcenter übermittelte Hauptschlüssel wird dann nach der Präsentation von nutzerbezogenen Daten zusammen mit diesen zur Personalisierung einer Applikation verwendet. Hierdurch entfällt ein individueller Schlüsselexport für jedes einzelne von Sicherheitselementen, da lediglich der Hauptschlüssel an das Trustcenter übertragen werden muss.

### Positionsliste

- SE: Sicherheitselement
- EG: Endgerät
- N: Nutzer
- TC: Trustcenter
- MK: Hauptschlüssel
- SK1: erster Teilschlüssel
- SK2: zweiter Teilschlüssel
- SN: Seriennummer
- NVM: Speicher
- T: Terminal
- SP: Speicher
- K1: Datenübertragung
- K2: Datenübertragung

- S20: Verfahrensschritt
- S21: Verfahrensschritt
- S22: Verfahrensschritt
- S23: Verfahrensschritt
- S24: Verfahrensschritt
- S25: Verfahrensschritt
- S26: Verfahrensschritt
- S30: Verfahrensschritt
- S31: Verfahrensschritt
- S32: Verfahrensschritt
- S33: Verfahrensschritt
- S34: Verfahrensschritt
- S35: Verfahrensschritt
- S36: Verfahrensschritt

## Patentansprüche

1. Verfahren zum Personalisieren eines Sicherheitselements (SE) eines mobilen Endgeräts (EG), insbesondere in Form eines Smartcard-Chips eines Kommunikationsendgeräts, mit den Schritten:
- Vorpersonalisieren des Sicherheitselements (SE) im Rahmen seines Herstellungsvorgangs;
- Endpersonalisieren des Sicherheitselements (SE) bei der erstmaligen Verwendung des Endgeräts (EG) durch einen Nutzer (N), bei dem eine Kommunikationsverbindung zwischen dem Endgerät (EG) und einem Trustcenter (TC) eines Kommunikationsnetzbetreibers aufgebaut wird;
**dadurch gekennzeichnet, dass**
- im Rahmen der Vorpersonalisierung, wenn das Sicherheitselement (SE) während seiner Herstellung zu Testzwecken bestromt wird, ein Hauptschlüssel (MK) aus zumindest zwei Teilschlüsseln (SK1, SK2) gebildet wird, wobei der erste Teilschlüssel (SK1) in einem Betriebssystem (BS) für das Sicherheitselement (SE) und der zweite Teilschlüssel (SK2) in einem Schlüssel der Herstellungsstätte (Fab-Key) enthalten ist,
- aus dem Hauptschlüssel (MK) und einer Seriennummer (SN) durch das Sicherheitselement (SE) ein individueller Schlüssel generiert und in einem Speicher (NVM) des Sicherheitselements (SE) gespeichert wird,
- der Hauptschlüssel (MK) an das Trustcenter (TC) übermittelt wird;
- im Rahmen der Endpersonalisierung des Sicherheitselements (SE) bei der erstmaligen Verwendung des Endgeräts (EG) die Seriennummer (SN) sowie persönliche Daten des Nutzers an das Trustcenter (TC) übermittelt und dort mit dem gespeicherten Hauptschlüssel (MK) zu einem modifizierten Hauptschlüssel (MK) verknüpft werden;
- durch das Trustcenter (TC) aus dem gespeicherten Hauptschlüssel (MK) sowie der Seriennummer (SN) der individuelle Schlüssel abgeleitet wird, und
- das Sicherheitselement (SE) mit dem modifizierten Hauptschlüssel (MK) personalisiert wird.

2. Verfahren nach einem der vorherigen Ansprüche, **dadurch gekennzeichnet, dass** dem Sicherheitselement (SE) während der Herstellung eine Seriennummer (SN) zugeordnet wird, die in einem Speicher (NVM) des Sicherheitselements (SE) hinterlegt wird.

3. Verfahren nach Anspruch 1, **dadurch gekennzeichnet, dass** die Serinenummer (SN) aus im Sicherheitselement (SE) vorhandenen Daten generiert wird.

4. Verfahren nach Anspruch 1, **dadurch gekennzeichnet, dass** die Ermittlung des Hauptschlüssels (MK) erfolgt, wenn das Sicherheitselement (SE) während seiner Herstellung das erste Mal bestromt wird.

5. Verfahren nach einem der vorherigen Ansprüche, **dadurch gekennzeichnet, dass** die Ermittlung des Hauptschlüssels (MK) erfolgt, solange das Sicherheitselement (SE) während seiner Herstellung noch im Waferverbund vorliegt.

6. Verfahren nach einem der vorherigen Ansprüche, **dadurch gekennzeichnet, dass** im Rahmen der Endpersonalisierung des Sicherheitselements (SE) nach der Eingabe der persönlichen Daten des Nutzers ein authentisches Auslesen der Seriennummer (SN) aus dem Speicher (NVM) des Sicherheitselements (SE) erfolgt, die insbesondere zusammen mit den persönlichen Daten des Nutzers des Endgeräts (EG) und der zu personalisierenden Applikation an das Trustcenter (TC) übertragen wird.

7. Verfahren nach Anspruch 1, **dadurch gekennzeichnet, dass** durch das Trustcenter (TC) die Authentizität der Seriennummer (SN) überprüft wird.

8. Verfahren nach einem der vorherigen Ansprüche, **dadurch gekennzeichnet, dass** die persönlichen Daten des Nutzers in ein mit dem Trustcenter (TC) kommunikativ verbundenes Terminal (T) eingegeben werden.

9. Verfahren nach einem der Ansprüche 1 bis 6, **dadurch gekennzeichnet, dass** die persönlichen Daten des Nutzers in das Endgerät (EG) mit dem Sicherheitselement (SE) eingegeben werden.

10. Verfahren nach einem der vorherigen Ansprüche, **dadurch gekennzeichnet, dass** in dem Trustcenter (TC) eine Applikation mit dem modifizierten Hauptschlüssel (MK) personalisiert und an das Endgerät (EG) übertragen wird.

11. Verfahren nach Anspruch 9, **dadurch gekennzeichnet, dass** die personalisierte Applikation über eine Luftschnittstelle an das Endgerät (EG) übertragen wird.

## Claims

1. A method for personalizing a security element (SE) of a mobile end device (EG), in particular in the form of a smart card chip of a communication end device, having the steps of:
- pre-personalizing the security element (SE) within the framework of its manufacturing process;
- finally personalizing the security element (SE) upon the first-time use of the end device (EG) by a user (N), wherein a communication connection is established between the end device (EG) and a trust center (TC) of a communication network operator;
**characterized in that**
- within the framework of the pre-personalization, when the security element (SE) is energized for test purposes during its manufacture, a master key (MK) is formed from at least two partial keys (SK1, SK2), wherein the first partial key (SK1) is contained in an operating system (BS) for the security element (SE) and the second partial key (SK2) is contained in a key of the manufacturing plant (Fab-Key),
- an individual key is generated by the security element (SE) from the master key (MK) and a serial number (SN) and stored in a memory (NVM) of the security element (SE),
- the master key (MK) is transmitted to the trust center (TC);
- within the framework of the final personalization of the security element (SE), the serial number (SN) and personal data of the user are transmitted upon the first-time use of the end device (EG) to the trust center (TC) and linked there with the stored master key (MK) to form a modified master key (MK);
- the individual key is derived by the trust center (TC) from the stored master key (MK) and the serial number (SN), and
- the security element (SE) is personalized with the modified master key (MK).

2. The method according to any of the preceding claims, **characterized in that** there is allocated to the security element (SE) during manufacture a serial number (SN) which is stored in a memory (NVM) of the security element (SE).

3. The method according to claim 1, **characterized in that** the serial number (SN) is generated from data present in the security element (SE).

4. The method according to claim 1, **characterized in that** the ascertainment of the master key (MK) is effected when the security element (SE) is energized for the first time during its manufacture.

5. The method according to any of the preceding claims, **characterized in that** the ascertainment of the master key (MK) is effected as long as the security element (SE) is still present in the wafer sandwich during its manufacture.

6. The method according to any of the preceding claims, **characterized in that** within the framework of the final personalization of the security element (SE), after the input of the user's personal data there is effected an authentic readout of the serial number (SN) from the memory (NVM) of the security element (SE), said serial number being transferred to the trust center (TC) in particular together with the personal data of the user of the end device (EG) and the application to be personalized.

7. The method according to claim 1, **characterized in that** the authenticity of the serial number (SN) is checked by the trust center (TC).

8. The method according to any of the preceding claims, **characterized in that** the user's personal data are input to a terminal (T) communicatively connected to the trust center (TC).

9. The method according to any of the claims 1 to 6, **characterized in that** the user's personal data are input to the end device (EG) having the security element (SE).

10. The method according to any of the preceding claims, **characterized in that** in the trust center (TC) an application is personalized with the modified master key (MK) and transferred to the end device (EG).

11. The method according to claim 9, **characterized in that** the personalized application is transferred to the end device (EG) via an over-the-air interface.

## Revendications

1. Procédé de personnalisation d'un élément de sécurité (SE) d'un équipement terminal (EG) mobile, notamment sous forme d'une puce de smartcard d'un équipement terminal de télécommunication, comprenant les étapes.
• pré-personnalisation de l'élément de sécurité (SE) dans le cadre de son processus de production;
• personnalisation finale de l'élément de sécurité (SE) lors de la première utilisation de l'équipement terminal (EG) par un utilisateur (N) lors de laquelle une liaison de communication entre l'équipement terminal (EG) et un centre de confiance (TC) d'un opérateur de réseau de communication est établie;
**caractérisé en ce que**
• dans le cadre de la pré-personnalisation, quand l'élément de sécurité (SE) est, pendant sa production, alimenté en courant à des fins d'essai, une clé principale (MK) est constituée à partir d'au moins deux clés partielles (SKI, SK2), la première clé partielle (SK1) étant contenue dans un système d'exploitation (BS) pour l'élément de sécurité (SE) et la deuxième clé partielle (SK2) étant contenue dans une clé du site de production (Fab-Key),
• à partir de la clé principale (MK) et d'un numéro de série (SN), une clé individuelle étant, par l'élément de sécurité (SE), générée et mémorisée dans une mémoire (NVM) de l'élément de sécurité (SE),
• la clé principale (MK) étant transmise au centre de confiance (TC);
• dans le cadre de la personnalisation finale de l'élément de sécurité (SE) lors de la première utilisation de l'équipement terminal (EG), le numéro de série (SN) ainsi que des données personnelles de l'utilisateur étant transmis au centre de confiance (TC) et y étant combinés à la clé principale (MK) mémorisée, de manière à obtenir une clé principale (MK) modifiée;
• par le centre de confiance (TC), à partir de la clé principale (MK) mémorisée et du numéro de série (SN), la clé individuelle étant déduite, et
• l'élément de sécurité (SE) étant personnalisé avec la clé principale (MK) modifiée.

2. Procédé selon une des revendications précédentes, **caractérisé en ce qu'**il est affecté à l'élément de sécurité (SE), pendant la production, un numéro de série (SN) qui est stocké dans une mémoire (NVM) de l'élément de sécurité (SE).

3. Procédé selon la revendication 1, **caractérisé en ce que** le numéro de série (SN) est généré à partir de données existant dans l'élément de sécurité (SE).

4. Procédé selon la revendication 1, **caractérisé en ce que** le calcul de la clé principale (MK) a lieu quand l'élément de sécurité (SE) est alimenté pour la première fois en courant pendant sa production.

5. Procédé selon une des revendications précédentes, **caractérisé en ce que** le calcul de la clé principale (MK) a lieu tant que l'élément de sécurité (SE) se trouve, pendant sa production, encore sous forme de composite wafer.

6. Procédé selon une des revendications précédentes, **caractérisé en ce que**, dans le cadre de la personnalisation finale de l'élément de sécurité (SE) après l'entrée des données personnelles de l'utilisateur, une lecture authentique du numéro de série (SN) depuis la mémoire (NVM) de l'élément de sécurité (SE) a lieu, qui, notamment conjointement avec les données personnelles de l'utilisateur de l'équipement terminal (EG) et de l'application à personnaliser, est transféré au centre de confiance (TC).

7. Procédé selon la revendication 1, **caractérisé en ce que**, par le centre de confiance (TC), l'authenticité du numéro de série (SN) est vérifiée.

8. Procédé selon une des revendications précédentes, **caractérisé en ce que** les données personnelles de l'utilisateur sont entrées dans un terminal (T) connecté au centre de confiance (TC) de manière communicative.

9. Procédé selon une des revendications de 1 à 6, **caractérisé en ce que** les données personnelles de l'utilisateur sont entrées dans l'appareil terminal (EG) doté de l'élément de sécurité (SE).

10. Procédé selon une des revendications précédentes, **caractérisé en ce que**, dans le centre de confiance (TC), une application est personnalisée avec la clé principale (MK) modifiée et est transférée à l'appareil terminal (EG).

11. Procédé selon la revendication 9, **caractérisé en ce que** l'application personnalisée est transférée par l'intermédiaire d'une interface radio à l'appareil terminal (EG).
